(19) Europäisches Patentamt
European Patent Office
Office européen des brevets

(11) **EP 3 038 954 B1**

(12) **FASCICULE DE BREVET EUROPEEN**

(45) Date de publication et mention
de la délivrance du brevet:
**19.04.2023 Bulletin 2023/16**

(21) Numéro de dépôt: **14761790.6**

(22) Date de dépôt: **26.08.2014**

(51) Classification Internationale des Brevets (IPC):
**B65G 47/244** *(2006.01)* **B65G 47/31** *(2006.01)*

(52) Classification Coopérative des Brevets (CPC):
**B65G 47/244; B65G 47/31**

(86) Numéro de dépôt international:
**PCT/EP2014/002318**

(87) Numéro de publication internationale:
**WO 2015/028138 (05.03.2015 Gazette 2015/09)**

(54) **PROCÉDÉ POUR TRANSPORTER ET TOURNER DES OBJETS PLATS**

VERFAHREN ZUM TRANSPORTIEREN UND DREHEN FLACHER GEGENSTÄNDE

METHOD FOR TRANSPORTING AND TURNING FLAT OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.08.2013 EP 13004196**

(43) Date de publication de la demande:
**06.07.2016 Bulletin 2016/27**

(73) Titulaire: **BOBST MEX SA**
**1031 Mex (CH)**

(72) Inventeur: **COULLERY, Gérard**
**1040 Villars Le Terroir (CH)**

(74) Mandataire: **Navarro, Asa Maria Thérèse et al**
**Bobst Mex SA**
**Group IP**
**Case postale**
**1001 Lausanne (CH)**

(56) Documents cités:
**EP-A1- 1 498 370        EP-A1- 2 060 514**
**EP-A1- 2 543 612        WO-A1-2011/034478**
**WO-A2-00/51916         WO-A2-00/64740**
**WO-A2-2007/084606     DE-U1-202011 110 089**
**US-A1- 2001 035 332    US-A1- 2006 163 035**
**US-A1- 2007 205 082**

**Description**

La présente invention concerne un procédé permettant de transporter et de faire pivoter des objets plats sur eux-mêmes, tout en les transportant de manière successive dans une direction donnée.

Dans l'industrie de l'emballage, la fabrication de boîtes, par exemple en carton ondulé, s'effectue traditionnellement en ligne, en pliant et en collant des découpes au moyen d'une machine communément appelée plieuse-colleuse. Une telle machine de traitement se présente habituellement sous la forme d'une succession de modules dans lesquelles sont répartis les différents agencements fonctionnels qui sont chargés de réaliser les multiples opérations élémentaires nécessaires à la confection des boîtes. Chaque module dispose de son propre système de transport des découpes, généralement des transporteurs à rouleaux ou à bandes, mais l'ensemble est agencé de manière à ce que le convoyage s'opère globalement de façon continue sur toute la longueur de la plieuse-colleuse.

La fabrication de boîtes complexes requiert des opérations de pliage et de collage au niveau des quatre côtés des découpes. Pour que ces opérations puissent être effectuées en un seul passage dans la plieuse-colleuse, il s'avère indispensable de modifier l'orientation des découpes au cours du processus de fabrication des boîtes. C'est la raison pour laquelle on a pensé à développer des dispositifs de pivotement destinés à être intégrés au sein même des plieuses-colleuses, et capables de tourner à plat toutes les découpes qui les traversent durant leur convoyage.

Etat de la technique

Parmi les dispositifs de pivotement connus de l'état de la technique, on distingue ceux qui mettent en oeuvre deux convoyeurs placés côte à côte, parallèlement à la direction de convoyage des découpes. Ainsi positionnés, ces convoyeurs sont en mesure de supporter conjointement chaque découpe durant son convoyage. Et comme ils sont par ailleurs animés de vitesses différentes, ils ont naturellement tendance à faire translater chaque découpe tout en la faisant tourner sur elle-même. L'ensemble est généralement agencé de manière à ce que le pivotement à plat s'opère sur 90°.

Ce type de dispositif de pivotement présente toutefois l'inconvénient d'être avant tout adapté au carton compact, c'est-à-dire aux découpes de petits et moyens formats. Son efficacité s'avère en effet significativement réduite dès lors que les découpes sont de grandes tailles comme c'est souvent le cas avec le carton ondulé. La raison à cela est qu'avec une découpe dont au moins une des dimensions est bien supérieure à la largeur du dispositif de pivotement, au fur et à mesure du pivotement, certaines portions d'extrémités de la découpe finissent immanquablement par dépasser de part et d'autre des deux convoyeurs placés côte à côte. Ces derniers sont alors contraints de générer le pivotement en agissant uniquement sur la portion la plus centrale de la découpe; les portions d'extrémités ne faisant alors que suivre le mouvement. Or en pratique, vaincre une telle inertie avec de si faibles bras de levier s'avère particulièrement difficile. De plus, d'importants glissements apparaissent rapidement au niveau de la portion centrale de la découpe. L'ensemble de ces phénomènes fait qu'il devient dès lors quasi impossible de contrôler avec précision le pivotement, et conséquemment de garantir la position finale de la découpe.

Les documents EP 0881173 et US 2007/205082 montrent chacun un exemple d'une machine permettant de changer l'orientation de tels articles.

Le document WO 2014/154333 montre un autre exemple de système de transport d'objet plats avec un dispositif de pivotement des objets. L'idée de cette demande antérieure est de proposer des convoyeurs qui sont disposés parallèlement l'un à l'autre afin de transporter chaque objet plat en le supportant conjointement, et qui sont à même d'être animés de vitesses différentes afin de faire pivoter à plat chaque objet tout en le transportant, dispositif de pivotement qui permettrait d'éviter les problèmes de l'état de la technique en étant parfaitement adapté au objets plats de grandes dimensions, et notamment à ceux réalisés en carton ondulé, tout en demeurant pleinement utilisable pour des objets de tailles standards voire de tailles réduites, qui plus est réalisés de carton compact. La solution au problème technique posé dans cette demande antérieure est caractérisée en ce que chaque convoyeur est monté réglable en position transversale de façon individuelle.

Le document US 2006/163035 A1 divulgue un procédé selon le préambule de la revendication 1.

Dans le cadre de telles machines de transport d'objets plats tels que décrit ci-dessus, lorsque ces objets subissent un pivotement sur 90° au cours de leur traitement dans la machine, on se trouve confronté à une perte de productivité de la machine qui est liée au fait que l'espacement entre objets est modifié par l'opération de pivotement.

Typiquement, des découpes de forme rectangulaire, c'est-à-dire qui ont un côté, dit côté longitudinal, plus grand que l'autre côté, dit côté transversal, sont introduites dans le sens de leur longueur dans la machine de traitement, c'est-à-dire le côté longitudinal de la découpe est parallèle au sens de déplacement et le côté transversal "sens de la largeur" est perpendiculaire au sens de déplacement de la découpe.

Après un pivotement sur 90° de la découpe, comme exposé ci-dessus, cette dernière se trouve alors dans une nouvelle position, dans laquelle le sens de la largeur est parallèle au sens de déplacement et le sens de la longueur est perpendiculaire au sens de déplacement de la découpe.

Compte tenu de la forme rectangulaire de la découpe et de sa position à l'entrée de la machine et de la position du centre de rotation C de la découpe lors du pivotement, l'espacement entre des découpes successives va forcément augmenter entre "l'avant pivotement" et "l'après pivotement" et cette augmentation d'espacement entre découpes successives conduit alors à une perte de productivité de la machine puisque l'espace perdu entre des découpes successives augmente.

Cette augmentation d'espacement, et donc la perte de productivité, est d'autant plus importante que la différence de dimensions entre le côté transversal et le côté longitudinal de la découpe est grande.

Exposé de l'invention

En conséquence, l'un des buts de la présente invention est d'améliorer le fonctionnement de telles machines de fabrication de boîtes à partir de découpes et en particulier de réduire les pertes de productivité.

Ce but est atteint par le procédé selon la revendication 1, selon lequel la vitesse de transport longitudinal des découpes est différente entre la zone de pivotement dans laquelle les découpes subissent un pivotement de 90° et dans la zone suivante de la machine.

Cette différence de vitesse permet ainsi de réduire l'écart entre les découpes successives ou de l'augmenter pour tenir compte du changement de position des découpes qui découle de leur pivotement sur 90°.

En effet, si le pivotement a pour effet que les découpes successives passent d'une position longitudinale dans le sens du transport à une position transversale, on cherchera à diminuer l'espacement entre les découpes après le pivotement, donc, par conséquent la vitesse de transport dans la zone suivante de la machine va être inférieure à celle qui prévaut dans la zone de pivotement.

Inversement, si le pivotement a pour effet que les découpes successives passent d'une position transversale dans le sens du transport à une position longitudinale, on cherchera à augmenter l'espacement entre les découpes dans la zone de pivotement, donc, par conséquent la vitesse de transport dans la zone de pivotement sera supérieure à celle qui prévaut dans la zone précédent la zone de pivotement. Cette opération est particulièrement critique et nécessaire si l'espacement entre des découpes successives est insuffisant pour permettre le transport l'une derrière l'autre des découpes successives dans une position longitudinale dans le sens du transport et sans chevauchement après pivotement.

Il est entendu que dans l'ensemble de la présente demande, la notion d'objet plat s'étend à tout objet aplati et de faible épaisseur, indépendamment du matériau qui le compose. On pense notamment ici à une feuille entière, une feuille prédécoupée, un ensemble de poses ou découpes attachées ponctuellement les unes aux autres, une pose ou découpe individuelle, une boîte pliée, etc. Par ailleurs, un tel objet plat peut être réalisé dans un matériau quelconque, et notamment en papier, en carton compact, en carton ondulé, en matière plastique, etc.

De manière analogue, le terme convoyeur désigne de façon générale n'importe quel dispositif capable de transporter un objet à plat. On pense notamment ici à un convoyeur à rouleaux, un convoyeur à bande, une juxtaposition de courroies de transport, un tapis de transport, ou à une quelconque combinaison de ces différents types de convoyeurs.

Brève description des dessins

Cette description, donnée à titre d'exemple non limitatif, est destinée à mieux faire comprendre en quoi consiste l'invention et comment elle peut être réalisée. La description est par ailleurs donnée en référence aux dessins annexés dans lesquels:

- la Figure 1 illustré une plieuse-colleuse, qui ne fait pas partie de l'invention, dans laquelle est intégrée une unité de pivotement mettant en oeuvre deux dispositifs de pivotement;
- la Figure 2 est une vue en perspective de dessus de l'unité de pivotement visible à la Figure 1;
- la Figure 3 montre un des dispositifs de pivotement en coupe longitudinale;

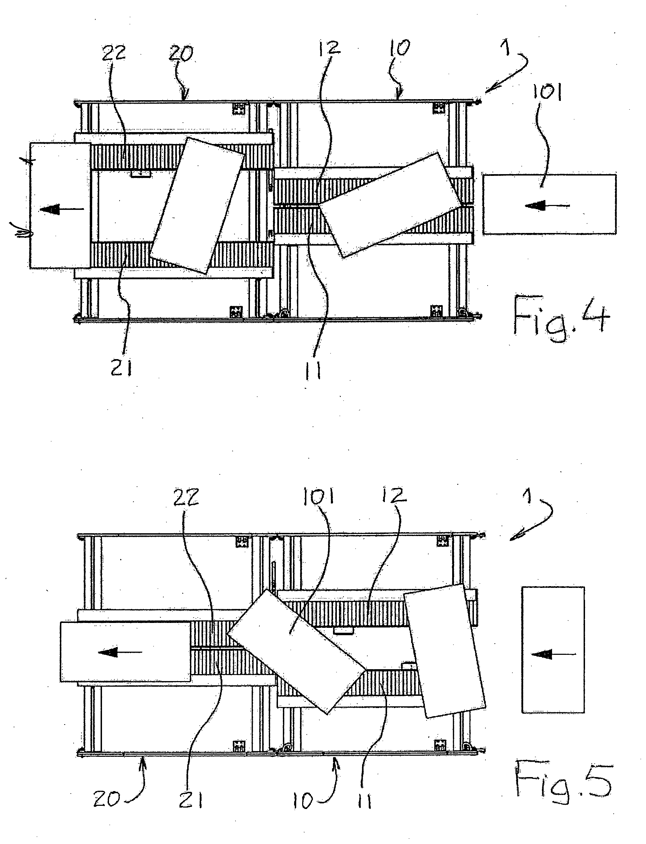

- la Figure 4 représente l'unité de pivotement dans une première configuration de fonctionnement permettant de traiter des objets allongés se présentant dans le sens de leur longueur;
- la Figure 5 fait quant à elle apparaître l'unité de pivotement dans une seconde configuration de fonctionnement permettant de traiter des objets allongés se présentant dans le sens de leur largeur;
- la Figure 6 illustre de façon schématique la variation de l'espacement entre découpes successives due à l'opération de pivotement sur 90° qui conduit à la perte de productivité selon le problème technique qui se pose dans le cadre de la présente invention;
- la Figure 7 illustre de façon schématique le résultat apporté par la présente invention;
- la Figure 8 illustre de façon schématique le principe de la Figure 6 dans une machine de traitement de découpes; et
- la Figure 9 illustre de façon schématique le principe de la Figure 7.

Exposé détaillé des formes de réalisation préférées

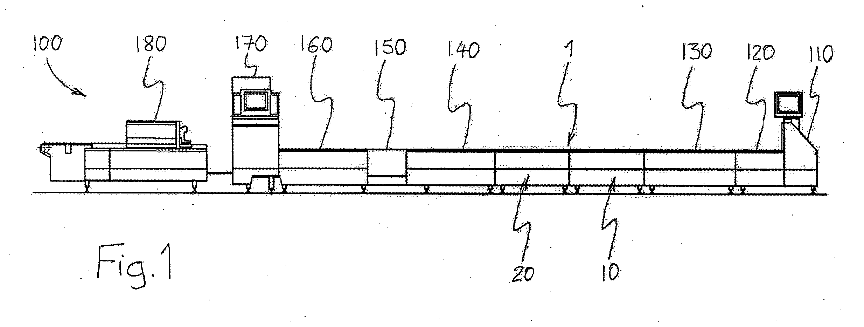

La Fig. 1 illustre une plieuse-colleuse 100, qui ne fait pas partie de l'invention, dont la fonction est de plier et de coller une succession d'objets plats 101 en forme de découpes, en vue de fabriquer des boîtes pliantes en carton ondulé. Dotée d'une structure modulaire, cette plieuse-colleuse 100 est classiquement composée d'un margeur 110, d'un module d'alignement 120, d'un premier module de pliage 130, d'un module de précassage 140, d'un module d'encollage 150, d'un second module de pliage 160, d'un module de transfert 170 et d'un module de réception 180. Ces différents éléments étant parfaitement connus de l'état de la technique, ils ne seront pas décrits en détail ici, tant structurellement que fonctionnellement.

La Fig. 1 montre en outre que la plieuse-colleuse 100 est également équipée d'une unité de pivotement 1 qui est implantée entre le premier module de pliage 130 et le module de précassage 140. Ainsi positionnée, cette unité de pivotement 1 est chargée de tourner à plat chaque découpe 101 tout en la transportant du premier module de pliage 130 au module de précassage 140.

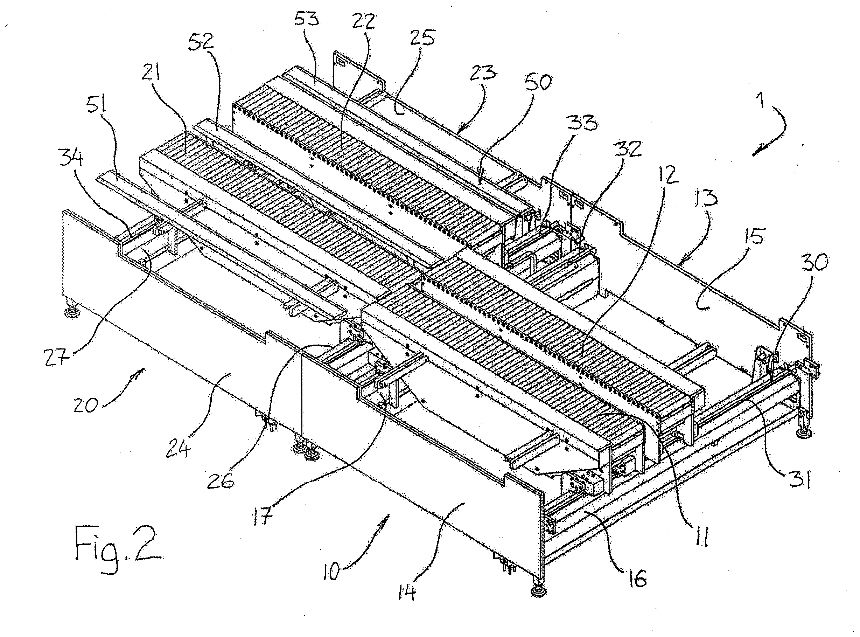

Ainsi qu'on peut le voir plus clairement sur la Fig. 2, l'unité de pivotement 1 est composée de deux dispositifs de pivotement 10, 20 qui sont disposés l'un à la suite de l'autre suivant la direction de convoyage.

Les dispositifs de pivotement 10, 20 sont disposés de préférence de façon sensiblement adjacente. Cette caractéristique signifie qu'ils sont placés directement l'un à la suite de l'autre, et qu'ils agissent par conséquent de manière directement successive. Cela sous-entend qu'aucun dispositif intermédiaire ou espace n'est présent entre les deux, ce qui permet d'optimiser l'action cumulée des deux dispositifs de pivotement 10, 20 successifs.

L'unité de pivotement 1 peut comporter en outre un convoyeur d'entrée qui est placé directement en amont des dispositifs de pivotement successifs 10, 20, et qui est en mesure de transporter chaque découpe 101 uniquement en le soutenant pardessous.

La présence d'un tel convoyeur d'entrée permet de transporter chaque découpe 101 sans la maintenir fermement, contrairement à ce qui se passe avec un convoyeur classique de plieuse-colleuse, qui associe généralement un transporteur inférieur et un transporteur supérieur en position superposée. Ici, le convoyeur d'entrée consiste en quelque sorte en un simple transporteur inférieur sur lequel repose chaque découpe 101. L'absence d'un quelconque transporteur supérieur garantit une certaine mobilité à la découpe 101, dans le plan de cette dernière. Cette liberté de déplacement permet alors avantageusement de débuter très tôt le pivotement de la découpe 101, c'est-à-dire dès qu'elle arrive sur les premiers convoyeurs 11, 12.

Dans ce mode particulier de réalisation, choisi uniquement à titre d'exemple, les deux dispositifs de pivotement 10, 20 composant l'unité de pivotement sont sensiblement identiques. Chacun d'entre eux comprend en effet deux convoyeurs 11, 12; 21, 22 qui sont disposés parallèlement l'un à l'autre afin de transporter chaque découpe 101 en le supportant conjointement, et qui sont à même d'être animés de vitesses différentes afin de faire pivoter à plat chaque découpe 101 tout en le transportant.

Chaque convoyeur 11, 12; 21, 22 peut être monté réglable en position transversale de façon individuelle.

Chaque convoyeur 11, 12; 21, 22 peut être monté mobile en déplacement transversal. Dans le cas présent, chaque convoyeur 11, 12; 21, 22 n'est donc pas simplement monté amovible entre quelques positions de fonctionnement, mais il est monté mobile afin de pouvoir être déplacé rapidement et de pouvoir accéder à une infinité de position de fonctionnement.

La mobilité transversale de chaque convoyeur 11, 12; 21, 22 s'exerce par exemple suivant un mouvement de translation linéaire. L'intérêt de ce type de mouvement est d'être particulièrement facile à guider et à générer. Cela permet de simplifier structurellement chaque dispositif de pivotement 10, 20, et donc d'améliorer sa fiabilité tout en baissant son prix de revient.

Chaque dispositif de pivotement 10, 20 est doté de moyens de guidage 30 qui sont en mesure de guider le déplacement transversal de chaque convoyeur 11, 12; 21, 22.

Pour chaque convoyeur 11, 12; 21, 22, les moyens de guidage 30 comportent par exemple au moins un rail de guidage transversal 31, 32; 33, 34 par rapport auquel le convoyeur 11, 12; 21, 22 est apte à coopérer par coulissement.

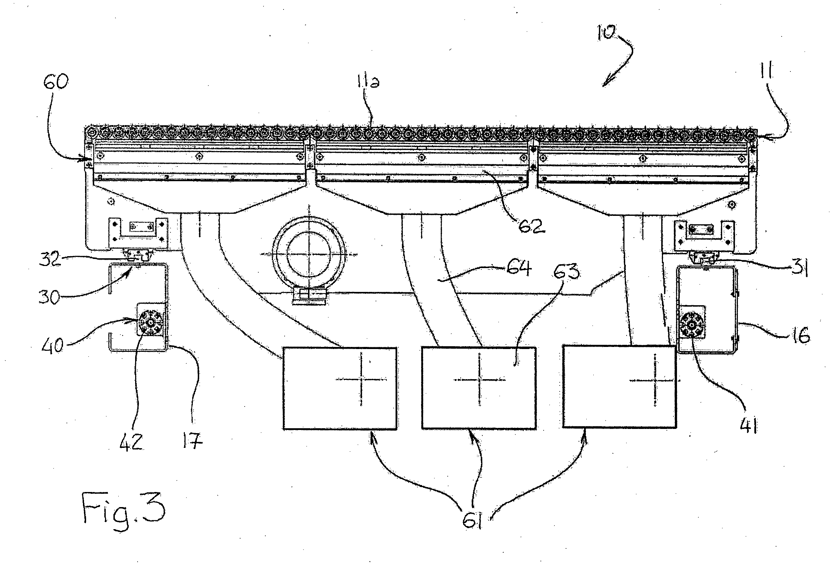

Dans cet exemple de réalisation, et conformément aux Figs. 2 et 3, chaque dispositif de pivotement 10, 20 repose sur un bâti 13, 23 qui est essentiellement composé de deux parois latérales verticales 14, 15; 24, 25 qui sont reliées par deux traverses horizontales 16, 17; 26, 27. Chaque convoyeur 11, 12; 21, 22 se présente sous la forme d'un convoyeur à rouleaux qui s'étend longitudinalement, et qui est monté transversalement coulissant par rapport à son bâti 13, 23, par l'intermédiaire de deux rails de guidage transversaux 31, 32, 33, 34 qui sont fixés respectivement sur les deux traverses 16, 17; 26, 27. Pour d'évidentes raisons de simplicité, les deux convoyeurs 11, 12; 21, 22 de chaque dispositif de pivotement 10, 20 coopèrent avec la même paire de rails de guidage 31, 32; 33, 34.

Chaque dispositif de pivotement 10, 20 peut être avantageusement pourvu de moyens de verrouillage capables de bloquer la mobilité transversale de chaque convoyeur 11, 12; 21, 22. Bien entendu, les moyens de verrouillage en question peuvent être de tout type connu, comme par exemple une simple vis de blocage.

A défaut, chaque dispositif de pivotement 10, 20 peut disposer de moyens d'entraînement 40 qui sont à même d'entraîner chaque convoyeur 11, 12; 21, 22 en déplacement transversal. Ces moyens d'entraînement 40 sont avant tout destinés à contrôler avec précision le déplacement de chaque convoyeur 11, 12; 21, 22. Mais ici, ils jouent aussi de manière avantageuse le rôle de moyens de verrouillage tels que précédemment définis. Ces moyens d'entraînement 40 peuvent par ailleurs être motorisés ou manuels, selon le degré de sophistication que l'on désire conférer aux dispositifs de pivotement 10, 20.

Dans cet exemple de réalisation, les moyens d'entraînement 40 se présentent pour chaque convoyeur 11, 12; 21, 22, sous la forme d'un classique système de transmission 41, 42 de type écrou et vis sans fin. Ce dernier ne sera pas décrit en détail ici, compte tenu du fait qu'il est parfaitement connu de l'état de la technique. On remarquera simplement que sur la Fig. 3, on peut voir les deux systèmes de transmission 41, 42 qui sont associés aux deux convoyeurs 11, 12 du dispositif de pivotement 10.

Le dispositif de pivotement comprend des moyens de support 50 qui sont en mesure de soutenir, tout en la laissant glisser, au moins une portion de chaque découpe 101 qui n'est pas supportée par les convoyeurs 11, 12; 21, 22.

Les moyens de support 50 comportent au moins une glissière 51, 52, 53 qui est montée de façon amovible le long d'un des côtés d'un des convoyeurs 11, 12; 21, 22, et qui s'étend de façon sensiblement longitudinale dans le plan du convoyeur 11, 12; 21, 22.

Dans cet exemple de réalisation, on observe que seul le dispositif de pivotement 20 est équipé de telles glissières 51, 52, 53. On dénombre deux glissières latérales 51, 53 qui sont placées respectivement au niveau des bords externes des convoyeurs 21, 22, ainsi qu'un glissière centrale 52 qui est positionnée le long du bord interne du convoyeur 21.

Du fait que les découpes 101 constituent des objets plats de faible masse spécifique, chaque dispositif de pivotement 10, 20 est doté de moyens de plaquage 60 qui sont chargés de plaquer chaque découpe 101 contre chaque convoyeur 11, 12; 21, 22.

Chaque convoyeur 11, 12; 21, 22 coopère avec des moyens de plaquage 60 qui lui sont propres. Cette caractéristique est avant tout destinée à ne pas perturber la mobilité transversale de chaque convoyeur 11, 12; 21, 22. Mais elle permet également d'activer de façon sélective, et/ou de faire fonctionner de façon différenciée, les différents moyens de plaquage 60 qui sont respectivement associés aux différents convoyeurs 11, 12; 21, 22.

Pour chaque convoyeur 11, 12; 21, 22, les moyens de plaquage 60 sont pourvus d'au moins un organe d'aspiration 61 qui sont à même de générer une aspiration à travers le convoyeur.

La Fig. 3 montre que dans cet exemple de réalisation, chaque convoyeur 11, 12; 21, 22 est associé à trois organes d'aspiration 61 sensiblement identiques. Chaque organe d'aspiration 61 se compose d'un caisson 62 qui prend place directement sous les rouleaux 11a du convoyeur 11, et qui est relié à une pompe d'aspiration 63 par l'intermédiaire d'une tubulure 64.

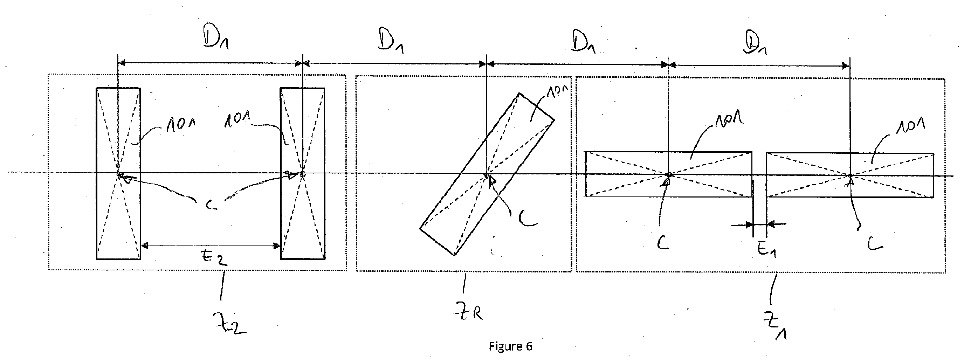

La perte de productivité liée au procédé mis en oeuvre dans l'état de la technique est illustrée dans la Fig. 6. Les découpes 101 se déplacent de la droite vers la gauche dans cette figure passant successivement dans la zone Z1, dans la zone ZR qui est la zone de pivotement et dans la zone Z2.

Dans la zone Z1, les découpes successives (seulement deux découpes sont illustrées pour l'exemple) se suivent avec une distance D1 séparant le centre de rotation C de chaque découpe 101. La distance D1 est la même que ce soit dans la zone Z1, ZR et Z2, toutes les découpes étant transportées à la même vitesse longitudinale, ici de droite à gauche.

Dans la zone Z1, les découpes sont transportées dans le sens longitudinal et l'espacement entre deux découpes successives est E1. Quand une découpe entre dans la zone de pivotement ZR, elle subit, comme il est connu dans l'état de la technique et décrit ci-dessus, un pivotement sur 90° et, une fois ce pivotement effectué, elle poursuit son chemin dans la machine pour les opérations suivantes mais cette fois, dès la zone Z2, disposée dans le sens transversal. Comme la vitesse de transport ne change pas, l'espacement entre chaque découpe quittant la zone de pivotement ZR change et passe de la valeur E1 à la valeur E2, E2 étant supérieur à E1. On peut facilement calculer la valeur de E1 et de E2 et leur relation:

Si L est la longueur de la découpe et
l est la largeur de la découpe
On a

$$E1 = D1 - 2(L/2) = D1 - L \quad (1)$$

$$E2 = D1 - 2(l/2) = D1 - l \quad (2)$$

Si on pose $L = N \times l$ alors on obtient

$$\text{De (1) } D1 = E1 + L = E1 + N \times l$$

$$\text{De (2) } E2 = E1 + N \times l - l = E1 + (N-1) \times l$$

Comme on le constate bien visuellement, et comme confirmé par ces quelques équations, l'écart entre les découpes augmente dans la zone Z2 ce qui entraîne une perte de productivité en aval dans la machine.

Selon l'invention, une idée est donc de diminuer la vitesse de transport dans la zone Z2 relativement à la vitesse prévalant dans la zone précédente, dans le sens de transport des découpes 101, afin d'engendrer une réduction de l'espacement entre les découpes 101 qui quittent la zone de pivotement ZR.

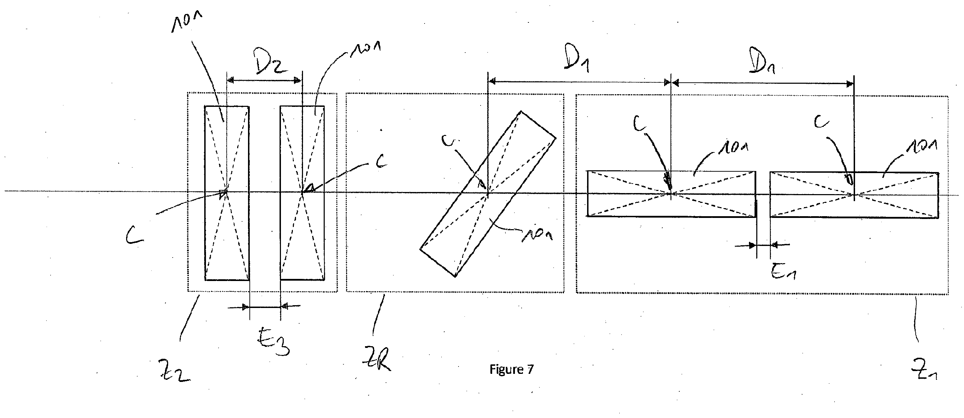

Le principe de l'invention est illustré dans la Fig. 7. Comme dans la Fig. 6, les découpes 101 sont transportées de la zone Z1 dans la zone de pivotement ZR puis dans la zone suivante Z2 et elles subissent le même changement d'orientation.

Selon la présente invention, on modifie le procédé en cherchant à optimiser la vitesse de transport dans la zone Z2 pour travailler au rendement optimal de la machine.

Selon un mode d'exécution, cette vitesse optimale dans la zone Z2 est inférieure à la vitesse de transport dans la zone de pivotement ZR ce qui a pour effet de ne pas maintenir une distance D1 constante entre les découpes mais de réduire cette distance à D2 dans la zone Z2, cela ayant pour effet de réduire en proportion l'écart E3 entre les découpes 110 dans la zone Z2. On conséquence, on évite la situation illustrée dans la Fig. 6 et on réduit l'espace perdu entre les découpes successives 110.

La valeur qui sera choisie pour E3, et obtenue par la différence de vitesses de transport, peut être encore supérieure à E1, mais inférieure à E2, égale à E1 ou même inférieure à E1, ce choix étant par exemple fonction des opérations qui sont appliquée dans la machine en aval de la zone de pivotement ZR. On peut donc adapter la différence de vitesse au résultat souhaité.

On peut tout à fait utiliser les exemples des Figs. 6 et 7 dans le sens contraire à celui pris en compte ci-dessus et considérer que les découpes sont transportées de gauche à droite, à savoir de la zone Z2 à la zone Z1 en passant par la zone de pivotement ZR. Dans un tel cas de figure, si le fonctionnement de la configuration de la Fig. 6 ne pose pas de problème à vitesse de transport constante au travers des trois zones Z2, ZR et Z1, il n'en va pas de même pour la configuration de la Fig. 7 dans la mesure où l'espacement E3 entre deux découpes 101 n'est pas suffisant pour permettre le passage de la position transversale (zone Z2) à la position longitudinale (zone Z1) sans chevauchement. Dans un tel cas, on comprend bien qu'il est nécessaire d'imposer une différence de vitesse entre la zone Z2 et les zones ZR et Z1, à savoir une augmentation de la vitesse de transport dans la zone ZR par rapport à celle de la zone Z2 afin d'éviter ce chevauchement de découpes 101.

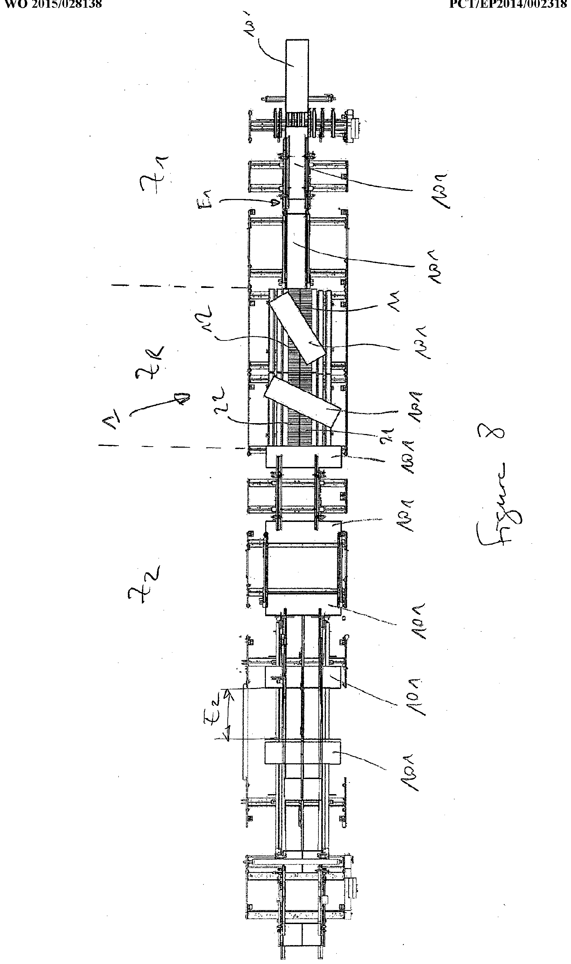

La Fig. 8 illustre le principe de la Fig. 6 dans une machine de traitement de découpes 101, qui ne fait pas partie de l'invention, par exemple telle qu'illustrée dans la Fig. 1.

Les découpes 101 arrivent dans la zone Z1 en déplacement longitudinal avec l'espacement E1 entre les découpes successives 101.

Les découpes 101 passent ensuite dans la zone de pivotement ZR où elles subissent une rotation de 90°. Cette zone de pivotement comprend par exemple une unité de pivotement 1 telle que décrite ci-dessus et référence est faite à cette description.

Lorsque les découpes 101 quittent la zone de pivotement ZR, elles entrent dans une zone suivante Z2 dont la vitesse de transport longitudinal est égale à celle qui prévaut dans les zones ZR et Z1 de sorte que l'espacement entre les découpes augmente, comme démontré dans la Fig. 6 et expliqué ci-dessus.

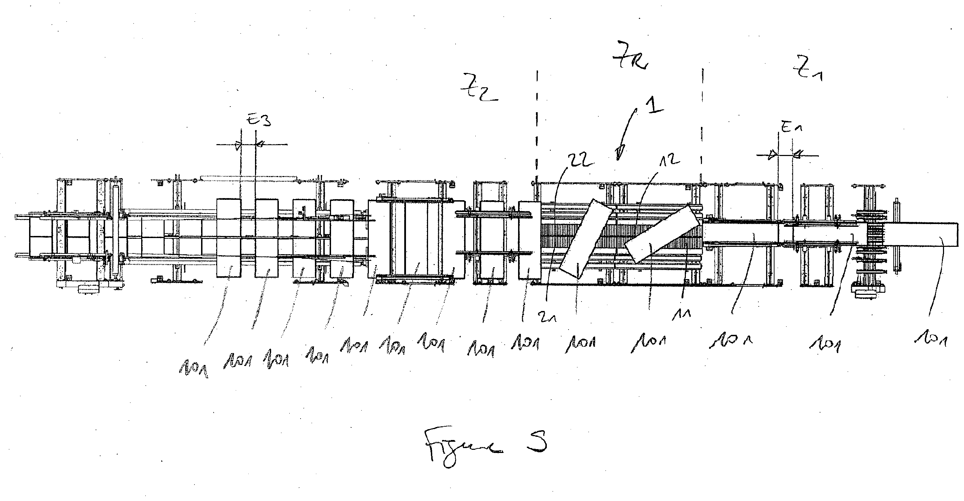

De façon similaire dans la Fig. 9, mais en appliquant le principe de l'invention, les découpes 101 qui quittent la zone de pivotement ZR et sont prise en charge dans la zone Z2 dans laquelle la vitesse de transport des découpes 101 est inférieure selon un mode d'exécution de l'invention, de sorte que l'espacement entre les découpes successives est réduit à une valeur E3 qui est inférieure à E2 (Fig. 8).

Pour permettre cette réduction de vitesse entre les zones ZR et Z2, es découpes entrant dans la zone Z2 sont saisies de façon fixe, par exemple par des courroies entre lesquelles les découpes sont prises et maintenues, et transportée à la vitesse de transport de la zone Z2. Par exemple on peut prévoir un transporteur inférieur et un transporteur supérieur en position superposée, comme connu de l'état de la technique.

Néanmoins, il faut en même temps que la partie arrière de la découpe qui subit encore un entraînement dans la zone de pivotement ZR puisse glisser sur les convoyeurs 21, 22 pour ne pas déformer la découpe 101 dont la partie avant est transportée à une vitesse inférieure.

Les découpes 101 sont plaquées sur les convoyeurs 11, 12, 21, 22 par aspiration. Selon l'invention, une réduction de la force d'aspiration sur la partie finale de la zone ZR est effectuée afin de permettre un glissement des convoyeurs 21, 22 en fin de parcours et éviter d'endommager la découpe 101 qui sort de la zone ZR et entre en même temps dans la zone Z2.

Une fois la découpe 101 entièrement dans la zone Z2 et à la nouvelle vitesse réduite, celle-ci peut être transportée par les moyens habituels de l'état de la technique.

Généralement, dans les machines de traitement des objets plats tels que décrits dans la présente demande, qui ne font pas partie de l'invention, un seul moteur est utilisé pour assurer le transport dans toute la machine, d'où le fonctionnement connu à vitesse de transport constante et les pertes de productivité qui en découlent.

Pour permettre un fonctionnement avec des vitesses de transport différentes dans des zones successives selon la présente invention, il est nécessaire de prévoir, par exemple, un deuxième moteur d'entraînement qui fonctionnerait à une autre vitesse que le premier moteur, par exemple à une vitesse inférieure.

Alternativement, on pourrait prévoir une transmission variable, par exemple une démultiplication ou un réducteur, qui agirait sur la vitesse de transport d'une zone (par exemple la zone Z2) pour permettre son fonctionnement à une vitesse optimale. Une telle transmission pourrait avoir un fonctionnement par palier, avec des démultiplications fixes, ou à variation continue ce qui permettrait un ajustement plus fin de la différence de vitesses. Bien entendu, le choix peut être fait en fonction des circonstances.

Une fois les découpes 101 se déplaçant dans la zone Z2, et des zones en "aval" de cette zone, à la vitesse optimale de la machine, on peut profiter de cette "nouvelle" vitesse pour effectuer des opérations particulières sur les découpes, opérations qui ne seraient pas forcément possibles ou aisées si les découpes se déplacent à la vitesse la plus élevées (typiquement V1).

## Revendications

1. Procédé de transport d'une succession d'objets plats (101) en forme de découpes rectangulaires dans une direction longitudinale mis en oeuvre dans un dispositif pour le traitement et le transport d'objets plats (101) d'une machine plieuse-colleuse (100) ayant pour fonction de plier et coller une succession d'objets plats (101) en forme de découpes rectangulaires (101), comprenant une unité de pivotement (1) comprenant deux dispositifs de pivotement (10, 20) sensiblement identiques, disposés l'un à la suite de l'autre suivant une direction de convoyage, chaque dispositif de pivotement (10, 20) comprenant deux convoyeurs (11, 12, 21, 22), les convoyeurs (11, 12, 21, 22) étant disposés parallèlement l'un à l'autre afin de transporter chaque découpe en la supportant conjointement et qui sont à même d'être animés de vitesses différentes afin de faire pivoter à plat chaque découpe tout en le transportant, lequel pivotement s'effectuant sur 90°, le dispositif comprenant au moins une zone de pivotement (ZR) des découpes dans laquelle les découpes sont transportés par les convoyeurs (11, 12) à une première vitesse de déplacement longitudinal (V1) et une deuxième zone (Z2) adjacente à la zone de pivotement (ZR), dans laquelle deuxième zone (Z2) les découpes sont transportés par les convoyeurs (21, 22) à une deuxième vitesse de déplacement longitudinal (V2), chaque découpe (101) étant pivoté tout en étant transporté à la première vitesse de déplacement longitudinal (V1) lors de la phase de pivotement dans la zone de pivotement (ZR), dans lequel chaque découpe (101) est transporté à la deuxième vitesse de déplacement longitudinal (V2) dans la deuxième zone (Z2) adjacente à la zone de pivotement (ZR), **caractérisé en ce que**

   - la deuxième vitesse (V2) est différente de la première vitesse (V1),
   - chaque convoyeur (11, 12, 21, 22) coopère avec des moyens de plaquage (60) propres, les moyens de plaquage (60) étant pourvus d'au moins un organe d'aspiration (61) à même de générer une aspiration à travers le convoyeur (11, 12, 21, 22),
   - si le pivotement a pour effet que les découpes successives passent d'une position longitudinale dans le sens du transport à une position transversale, la deuxième vitesse (V2) est inférieure à la première vitesse (V1), la deuxième zone (Z2) suivant la zone de pivotement (ZR) dans le sens de déplacement des découpes (101), les découpes entrant dans la deuxième zone (Z2) étant saisies de façon fixe, la partie arrière de la découpe qui subit encore un entrainement dans la zone de pivotement (ZR) pouvant glisser sur les premiers convoyeurs (11, 12) du fait d'une réduction de la force d'aspiration sur la partie finale de la zone de pivotement (ZR) pour ne pas déformer la découpe dont la partie avant est transportée à une vitesse (V2) inférieure,
   - si le pivotement a pour effet que les découpes successives passent d'une position transversale dans le sens du transport à une position longitudinale, la deuxième vitesse (V2) est supérieure à la première vitesse (V1), la deuxième zone précédant la zone de pivotement (ZR) dans le sens de déplacement des découpes (101).

## Patentansprüche

1. Verfahren zum Transportieren einer Abfolge von flachen Objekten (101) in Form rechteckiger Zuschnitte in einer Längsrichtung, das in einer Vorrichtung zur Behandlung und zum Transport von flachen Objekten (101) einer Falt- und Klebemaschine (100) eingesetzt wird, die dazu dient, eine Abfolge von flachen Objekten (101) in Form rechteckiger Zuschnitte (101) zu falten und zu kleben, umfassend eine Dreheinheit (1), die zwei im Wesentlichen identische Drehvorrichtungen (10, 20) umfasst, die in einer Förderrichtung nacheinander angeordnet sind, wobei jede Drehvorrichtung (10, 20) zwei Förderbänder (11, 12, 21, 22) umfasst, wobei die Förderbänder (11, 12, 21, 22) parallel zueinander angeordnet sind, um jeden Zuschnitt zu transportieren und ihn dabei gemeinsam zu stützen, und die imstande sind, bei unterschiedlichen Geschwindigkeiten angetrieben zu werden, um jeden Zuschnitt flachliegend zu drehen und ihn dabei zu transportieren, wobei die Drehung um 90° erfolgt, wobei die Vorrichtung mindestens einen Drehbereich (ZR) für die Zuschnitte, in dem die Zuschnitte von den Förderbändern (11, 12) bei einer ersten Längsverschiebungsgeschwindigkeit (V1) transportiert werden, und einen zweiten Bereich (Z2) angrenzend an den Drehbereich (ZR) umfasst, wobei im zweiten Bereich (Z2) die Zuschnitte von den Förderbändern (21, 22) bei einer zweiten Längsverschiebungsgeschwindigkeit (V2) transportiert werden, wobei in der ersten Drehphase im Drehbereich (ZR) jeder Zuschnitt (101) gedreht wird und zugleich bei der ersten Längsverschiebungsgeschwindigkeit (V1) transportiert wird, wobei jeder Zuschnitt (101) im zweiten Bereich (Z2) angrenzend an den Drehbereich (ZR) bei der zweiten Längsverschiebungsgeschwindigkeit (V2) transportiert wird, **dadurch gekennzeichnet, dass**

   - die zweite Geschwindigkeit (V2) sich von der ersten Geschwindigkeit (V1) unterscheidet,
   - jedes Förderband (11, 12, 21, 22) mit eigenen Plattierungsmitteln (60) zusammenwirkt, wobei die Plattierungsmittel (60) mit mindestens einem Ansaugorgan (61) versehen sind, das imstande ist, eine Saugwirkung durch das Förderband (11, 12, 21,22) hindurch zu erzeugen,

- falls die Drehung dazu führt, dass die nachfolgenden Zuschnitte in der Transportrichtung von einer längslaufenden Position in eine querliegende Position übergehen, die zweite Geschwindigkeit (V2) kleiner ist als die erste Geschwindigkeit (V1), wobei der zweite Bereich (Z2) dem Drehbereich (ZR) in der Verschiebungsrichtung der Zuschnitte (101) folgt, wobei die Zuschnitte, die in den zweiten Bereich (Z2) eintreten, auf feste Weise gegriffen werden, wobei der hintere Teil des Zuschnitts, der noch einem Antrieb im Drehbereich (ZR) unterliegt, aufgrund einer Verringerung der Saugkraft auf dem letzten Teil des Drehbereichs (ZR) auf die ersten Förderbänder (11, 12) gleiten kann, um den Zuschnitt, dessen vorderer Teil bei einer kleineren Geschwindigkeit (V2) transportiert wird, nicht zu verformen,

- falls die Drehung dazu führt, dass die nachfolgenden Zuschnitte in der Transportrichtung von einer querliegenden Position in eine längslaufende Position übergehen, die zweite Geschwindigkeit (V2) größer ist als die erste Geschwindigkeit (V1), wobei der zweite Bereich dem Drehbereich (ZR) in der Verschiebungsrichtung der Zuschnitte (101) vorangeht.

## Claims

1. Method for conveying a series of flat objects (101) in the form of rectangular cutouts in a longitudinal direction implemented in a device for the processing and conveying of flat objects (101) from a folder-gluer machine (100) having the function of folding and gluing a series of flat objects (101) in the form of rectangular cutouts (101), comprising a pivot unit (1) comprising two substantially identical pivot devices (10, 20), disposed following one another in a conveying direction, each pivot device (10, 20) comprising two conveyors (11, 12, 21, 22), the conveyors (11, 12, 21, 22) being disposed parallel to one another in order to convey each cutout by supporting it together and which are able to be moved at different speeds in order to make each cutout pivot by conveying it, which pivot is made over 90°, the device comprising at least one pivot zone (ZR) of cutouts wherein the cutouts are conveyed by the conveyors (11, 12) at a first longitudinal movement speed (11, 12) and a second zone (Z2) adjacent to the pivot zone (ZR), wherein the second zone (Z2), the cutouts are conveyed by the conveyors (21, 22) at a second longitudinal movement speed (V2), each cutout (101) being pivoted while being conveyed at the first longitudinal movement speed (V1) during the pivot phase in the pivot zone (ZR), wherein each cutout (101) is conveyed at the second longitudinal movement speed (V2) in the second zone (Z2) adjacent to the pivot zone (ZR), **characterised in that**

- the second speed (V2) is different from the first speed (V1),
- each conveyor (11, 12, 21, 22) engages with specific flattening means (60), the flattening means (60) being provided with at least one suctioning member (61) able to generate a suctioning through the conveyor (11, 12, 21, 22),
- if the pivot has the effect that the series of cutouts pass from a longitudinal position in the direction of the conveying to a transverse position, the second speed (V2) is less than the first speed (V1), the second zone (Z2) following the pivot zone (ZR) in the movement direction of the cutouts (101), the cutouts entering into the second zone (Z2) being seized in a fixed manner, the rear part of the cutout which also undergoes a driving in the pivot zone (ZR) being able to slide over the first conveyors (11, 12) due to a reduction of the suctioning force over the final part of the pivot zone (ZR) to not shape the cutout, the front part of which is conveyed at a lesser speed (V2),
- if the pivot has the effect that the series of cutouts pass from a transverse position in the direction of the conveying to a longitudinal position, the second speed (V2) is greater than the first speed (V1), the second zone preceding the pivot zone (ZR) in the movement direction of the cutouts (101).

Fig.1

Fig.2

Fig.3

EP 3 038 954 B1

Fig.4

Fig.5

EP 3 038 954 B1

Figure 6

Figure 7

EP 3 038 954 B1

Figure 8

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0881173 A
- US 2007205082 A

- WO 2014154333 A
- US 2006163035 A1